# EUROPÄISCHE PATENTSCHRIFT

(11) **EP 2 023 711 B1**
(45) Veröffentlichungstag und Bekanntmachung des Hinweises auf die Patenterteilung: **20.08.2014**
(21) Anmeldenummer: 07725751.7
(22) Anmeldetag: 01.06.2007
(51) Int. Cl.: A01G 13/10, A01M 29/34, A01N 25/34

(54) **INSEKTENSCHUTZFOLIE**
INSECT SCREENING SHEET
FILM PROTECTEUR ANTI-INSECTES

(30) Priorität: 03.06.2006 DE 102006026099
(43) Veröffentlichungstag der Anmeldung: 18.02.2009
(73) Patentinhaber: OVD Kinegram AG, 6301 Zug (CH); Max-Planck-Gesellschaft zur Förderung der Wissenschaften e.V., 80539 München (DE)
(72) Erfinder: SCHILLING, Andreas, 6332 Hagendorn (ZG) (CH); HORB, Stanislav, N., 71229 Leonberg (DE)
(74) Vertreter: Zinsinger, Norbert
(86) Internationale Anmeldenummer: PCT/EP2007/004871
(87) Internationale Veröffentlichungsnummer: WO 2007/140937

(56) Entgegenhaltungen:
- WO-A-92/19101
- DE-T2- 69 824 559
- US-A- 5 303 502

## Beschreibung

Die Erfindung betrifft eine Insektenschutzfolie mit einer insektenabweisenden Schicht.

Zum Schutz vor Insekten sind zahlreiche Vorrichtungen und Verfahren bekannt.

Zum Schutz von Obstbäumen und dergleichen vor kriechenden Insekten bzw. Insektenlarven sind beispielsweise Folien mit klebriger Oberfläche bekannt, auf denen die Insekten bzw. Insektenlarven haften bleiben. Klebrige Oberflächen können allerdings durch Verschmutzen und/oder Abwaschen des Klebers ihre Wirkung einbüßen.

Weiter sind Schutzanstriche bekannt, die jedoch eine unerwünschte Umweltbelastung mit sich bringen können, insbesondere wenn es sich um toxische Anstriche handelt.

Aus WO 92/19 101 ist eine Insektenschutzfolie mit einer insektenabweisenden Schicht, wobei die insektenabweisende Schicht eine räumliche Oberflächenstruktur mit statistisch verteilten Strukturelementen aufweist bekannt.

Der Erfindung liegt nun die Aufgabe zugrunde, eine kostengünstige und leicht zu handhabende Vorrichtung anzugeben, welche einen dauerhaften und umweltfreundlichen Insektenschutz ermöglicht.

Die Aufgabe der Erfindung wird mit einer Insektenschutzfolie gemäß Anspruch 1 gelöst.

Es kann hierbei auch vorgesehen sein, Strukturgrößen auf mehr als zwei Größenskalen (grob/fein) zu haben oder es kann eine kontinuierliche Verteilung von Strukturgrößen über einen größeren Bereich vorgesehen sein:

Die vorgeschlagene Insektenschutzfolie zeichnet sich dadurch aus, dass sie die Haftung zwischen Insekt und Insektenschutzfolie mittels der speziellen Oberflächenstruktur der insektenabweisenden Schicht verhindert oder stark verringert. Diese Oberflächenstruktur ist so ausgebildet, dass die abzuweisenden Insekten bzw. Insektenlarven nicht zu haften vermögen und damit die mit der Insektenschutzfolie versehenen Bereiche nicht passieren können. Dieser Effekt beruht darauf, dass sich die Haftorgane der Insekten bzw. der Insektenlarven nicht an die ständig ändernde Beschaffenheit der erfindungsgemäßen Oberflächenstruktur anzupassen vermögen. Durch den beständigen Wechsel zwischen groben und feinen Strukturelementen wird keine Haftungsstrategie ausgebildet, so dass das Insekt bzw. die Insektenlarve von der Oberfläche der Insektenschutzfolie abgleitet. Der insektenabweisende Effekt wird verstärkt, wenn die Insektenschutzfolie senkrecht oder unter einem steilen Winkel angeordnet ist.

Weil der insektenabweisende Effekt ausschließlich auf der erfindungsgemäßen Ausbildung der Oberflächenstruktur der insektenabweisenden Schicht beruht, die keinerlei Stoffe in die Umwelt abgibt, wird die Umwelt optimal geschont. Es wird weiter vermieden, die Insekten einschließlich der Nutzinsekten zu vernichten, wie das beim Einsatz von Klebestreifen oder Insektiziden der Fall ist, oder insektenfressende Tiere durch kontaminierte Insekten zu beeinträchtigen.

Die Oberflächenstruktur der insektenabweisenden Schicht kann mit den bekannten Formgebungsverfahren zur Folienherstellung in einem Rolle-zu-Rolle-Prozeß ausgeformt werden, beispielsweise durch Heißprägen eines thermoplastischen Replizierlacks oder durch Kaltprägen und Aushärten eines UV-härtbaren Replizierlacks.

Weitere vorteilhafte Ausgestaltungen sind in den Unteransprüchen bezeichnet.

Es kann vorgesehen sein, dass die Abmessungen der Strukturelemente, wie Breite und Höhe und lateraler Abstand, ≤ 100 µm sind.

Weiter kann vorgesehen sein, dass die Abmessungen der Feinstrukturelemente, wie Breite, Höhe und lateraler Abstand, im Bereich zwischen 5 nm und 1:000 nm, vorzugsweise zwischen 5 nm und 200 nm, liegen.

Die Abmessungen der Grobstrukturelemente, wie Breite, Höhe und lateraler Abstand, können im Bereich zwischen 2 µm und 100 µm liegen.

Es kann vorgesehen sein, dass die Grobstruktur 5 bis 1.000 mal größere typische Strukturparameter, wie Breite, Tiefe und lateraler Abstand der Strukturelemente, als die Feinstruktur aufweist.

Es kann vorgesehen sein, dass die mittlere Anzahl der Strukturelemente pro Millimeter zwischen 10 und 5·10⁵ liegt.

Weiter kann vorgesehen sein, dass die Feinstruktur eine mittlere Tiefe von 5 nm bis 1.000 nm, vorzugsweise von 5 nm bis 200 nm, bei einer maximalen Tiefe von 10 nm bis 1.000 nm, vorzugsweise 10 nm bis 300 nm, aufweist.

In einer vorteilhaften Ausgestaltung ist vorgesehen, dass die Feinstruktur ein mittleres Tiefen-zu-Breiten-Verhältnis von 0,3 bis 5 aufweist. Das dimensionslose Tiefen-zu-Breiten-Verhältnis, auch als Aspektrate bezeichnet, setzt die Tiefe des "Tales" zwischen zwei benachbarten Erhebungen ins Verhältnis zu dem Abstand der "Gipfel" zweier benachbarter Erhebungen.

Die Feinstruktur kann also durch Parameter, wie die mittlere Tiefe, die maximale Tiefe und ein typisches mittleres Tiefen-zu-Breiten-Verhältnis charakterisiert werden, wie vorstehend beschrieben.

In einer vorteilhaften Ausbildung ist vorgesehen, dass die Grobstruktur eine regelmäßige Gitterstruktur ist. Hierbei ist es weiter auch möglich, dass sich die Rasterweiten der Gitterstruktur in x und y Richtung unterscheiden oder dass es sich bei der Gitterstruktur um eine geometrisch transformierte Gitterstruktur handelt, beispielsweise mit Wellen oder kreisförmigen Koordinatenachsen in x und/ oder y Richtung.

Weiter kann vorgesehen sein, dass die Gitterstruktur ein Tiefen-zu-Breiten-Verhältnis > 1 aufweist.

In einer weiteren vorteilhaften Ausgestaltung ist vorgesehen, dass die räumliche Oberflächenstruktur erste Bereiche mit einer als periodische Struktur ausgebildeten Grobstruktur und zweite Bereiche mit einer als periodische Struktur ausgebildeten Feinstruktur aufweist, wobei vorgesehen ist, dass die ersten und die zweiten Bereiche miteinander vermischt sind.

Bezüglich der Kombination bzw. Vermischung der Feinstrukturen und der Grobstruktur kann vorgesehen sein, dass die Feinstrukturen in Bereichen der Grobstruktur ausgebildet sind, beispielsweise auf dem Grund der "Täler" der Grobstruktur. Es kann aber auch vorgesehen sein, dass die Feinstrukturen der Grobstruktur überlagert sind, d.h. die Konturen der Grobstruktur modulieren. Dabei kann weiter vorgesehen sein, dass die Modulation nur bereichsweise erfolgt, beispielsweise daß nur die "Gipfelbereiche" und/oder die "Täler" der Grobstruktur mit der Feinstruktur moduliert sind. Vorteilhafterweise kann aber auch vorgesehen sein, die Strukturelemente der Grobstruktur und der Feinstruktur miteinander zu vermischen, wobei eine zufällige Verteilung weitere Vorteile bietet.

Weiter können Oberflächenstrukturen vorgesehen sein, bei denen die Abmessungen der Strukturelemente zwischen 5 nm und 100 µm liegen und bei denen die Strukturelemente so ausgebildet sind, dass die Grobstruktur fließend in die Feinstruktur übergeht. Die typischen Abmessungen der Strukturelemente erstrecken sich dabei annähernd über zwei Größenordnungen.

Vorteilhafterweise können sich die Strukturelemente auch hinsichtlich ihrer Form voneinander unterscheiden. Auf diese Weise kann eine praktisch unbegrenzte Anzahl unterschiedlicher Strukturelemente bereitgestellt werden, die eine besonders gute Insektenschutzwirkung ausbilden, wenn sie dicht an dicht in zufälliger Anordnung auf der Oberfläche der Insektenschutzfolie verteilt sind und auf diese Weise die insektenabweisende Oberflächenstruktur ausbilden. Eine solche Oberflächenstruktur kann vorteilhafterweise durch die Angabe der Mittelwerte aller Strukturparameter sowie der Grenzwerte aller Strukturparameter beschrieben werden.

Es kann vorgesehen sein, dass die insektenabweisende Schicht als Schicht einer Übertragungslage einer Transferfolie ausgebildet ist.

Die Dimensionierung der Dicke der insektenabweisenden Schicht kann sich beispielsweise an der angestrebten Reißfestigkeit der Schicht und/oder an der maximalen Rauhtiefe der Oberflächenstruktur orientieren. Die Rauhtiefe der Insektenfolie ist ein an der Meßtechnik orientierter Parameter, in den die weiter oben bezeichneten Tiefen der Grobstruktur und Feinstruktur sowie die Höhenanordnung der Strukturelemente eingehen. Die Strukturelemente können beispielsweise eine gemeinsame untere Bezugsebene aufweisen und somit fußbündig angeordnet sein. Die Strukturelemente können weiter eine gemeinsame obere Bezugsebene aufweisen und somit kopfbündig angeordnet sein, oder sie können beliebige Lagen zwischen den beiden Extrempositionen einnehmen.

Es kann beispielsweise vorgesehen sein, dass die Dicke der insektenabweisenden Schicht das 2- bis 3-fache der maximalen Rauhtiefe ihrer Oberflächenstruktur ist.

Weitere vorteilhafte Ausgestaltungen beziehen sich auf Schichten der Insektenschutzfolie, die auf oder unter der insektenabweisenden Schicht angeordnet sind. Die Oberseite der insektenabweisenden Schicht ist dabei die Seite, die mit der insektenabweisenden Oberflächenstruktur ausgebildet ist.

Es kann vorgesehen sein, dass die insektenabweisende Schicht mit mindestens einer wasserlöslichen und/oder biologisch abbaubaren Schutzschicht bedeckt ist. Diese Schutzschicht kann weiter auch als Ablöseschicht ausgestaltet sein, die es zusätzlich verhindert, dass eine an der Unterseite der Insektenschutzfolie angeordnete Kleberschicht an der Oberseite der insektenabweisenden Schicht anhaftet und damit ein Aufrollen der Insektenschutzfolie ermöglicht. Damit kann auch darauf verzichtet werden, bei der Verwendung eines Kaltklebers eine von der Insektenschutzfolie abziehbare Schutzschicht vorzusehen.

Die erfindungsgemäße Insektenschutzfolie kann auf vielfältige Weise konfektioniert werden.

Es kann vorgesehen sein, dass die Insektenschutzfolie als Transferfolie mit einer Trägerfolie und einer von der Trägerfolie ablösbaren Übertragungslage ausgestaltet ist und dass die insektenabweisende Schicht in der Übertragungslage als Schicht der Übertragungslage angeordnet ist.

Es kann ein insektenabweisendes Klebeband vorgesehen sein, das beispielsweise zu einer Klebebandrolle aufgewickelt ist, wobei die ggf. mit einer Schutzschicht versehene Oberseite der insektenabweisenden Schicht des Klebebandes nach außen weist und somit zugleich die Kleberschicht des Klebebandes vor Verschmutzung oder dergleichen schützt.

Es kann zusätzlich vorgesehen sein, dass auf der Oberseite der insektenabweisenden Schicht eine Ablöseschicht angeordnet ist oder die insektenabweisende Schicht als Ablöseschicht ausgestaltet ist, die ein Ablösen der Kleberschicht von der insektenabweisenden Schicht und damit ein Aufrollen des Klebebands ermöglicht.

Weiter kann ein insektenabweisendes Band oder eine insektenabweisende Folie vorgesehen sein, das bzw. die vorzugsweise bereichsweise mit einem Klettband versehen ist. Eine großflächige Folie kann beispielsweise zum Schutz von Folienbeeten verwendet werden. Die insektenabweisende Schicht der Folie kann zur Erhöhung der Reißfestigkeit auf eine Trägerfolie aufgebracht sein, beispielsweise auf eine PVC-Folie von 12 bis 35 µm Dicke. Es kann sich aber auch um eine besonders dünne Folie handeln, die durch Adhäsion an beliebig geformten Flächen haftet, beispielsweise an der Außenseite der Fenster eines Gewächshauses.

Die Insektenschutzfolie kann eigene Mittel zur Befestigung aufweisen, wie eine Kleberschicht oder eine Klettschicht, es kann aber auch vorgesehen sein, die Insektenschutzfolie mit externen Mitteln zu befestigen, beispielsweise mit Klebeband oder mit Heftklammern oder dergleichen oder sie einzuklemmen, beispielsweise zwischen Fensterrahmen und Fenster.

Weiter kann die Insektenschutzfolie mit einer wasserlöslichen und/oder biologisch abbaubaren Schutzschicht vorgesehen sein, wie weiter oben beschrieben. Eine solche Schutzschicht kann beispielsweise durch natürlichen Niederschlag abgewaschen und somit aktiviert werden. Auf diese Weise kann beispielsweise erreicht sein, dass zunächst Nutzinsekten die Insektenschutzfolie ungehindert passieren können, jedoch später auftretende Schadinsekten die nunmehr aktivierte insektenabweisende Oberfläche der Insektenschutzfolie nicht passieren können.

Weiter ist eine insektenabweisende Suspension vorgesehen, die flockenförmige Partikel der insektenabweisenden Schicht aufweist. Nach dem Verdunsten der Flüssigkeit, in der die flockenförmigen Partikel verteilt sind, bilden die flockenförmigen Partikel eine zusammenhängende insektenabweisende Partikelschicht. Es kann vorteilhafterweise vorgesehen sein, dass die flockenförmigen Partikel auf beiden Seiten die insektenabweisende Oberflächenstruktur aufweisen, so dass die insektenabweisende Wirkung unabhängig von der Gebrauchslage der flockenförmigen Partikel eintritt. Bei der Flüssigkeit der vorgenannten Suspension kann es sich vorteilhafterweise um einen Lack handeln, dessen Bindemittel die dauerhafte Haftung der flockenförmigen Partikel auf dem mit der Suspension versehenen Substrat vermittelt.

Im folgenden wird die Erfindung anhand von mehreren Ausführungsbeispielen unter Zuhilfenahme der beiliegenden Zeichnungen beispielhaft verdeutlicht.
Es zeigen
- Fig. 1: eine schematische Schnittdarstellung eines ersten Ausführungsbeispiels der erfindungsgemäßen Insektenschutzfolie;
- Fig. 2: eine schematische Schnittdarstellung eines zweiten Ausführungsbeispiels der erfindungsgemäßen Insektenschutzfolie;
- Fig. 3: eine schematische Schnittdarstellung eines dritten Ausführungsbeispiels der erfindungsgemäßen Insektenschutzfolie;
- Fig. 4: eine schematische Schnittdarstellung eines vierten Ausführungsbeispiels der erfindungsgemäßen Insektenschutzfolie;
- Fig. 5a, b: Profilverlauf und Draufsicht eines fünften Ausführungsbeispiels der erfindungsgemäßen Insektenschutzfolie;
- Fig. 6: die Draufsicht eines sechsten Ausführungsbeispiels der erfindungsgemäßen Insektenschutzfolie.

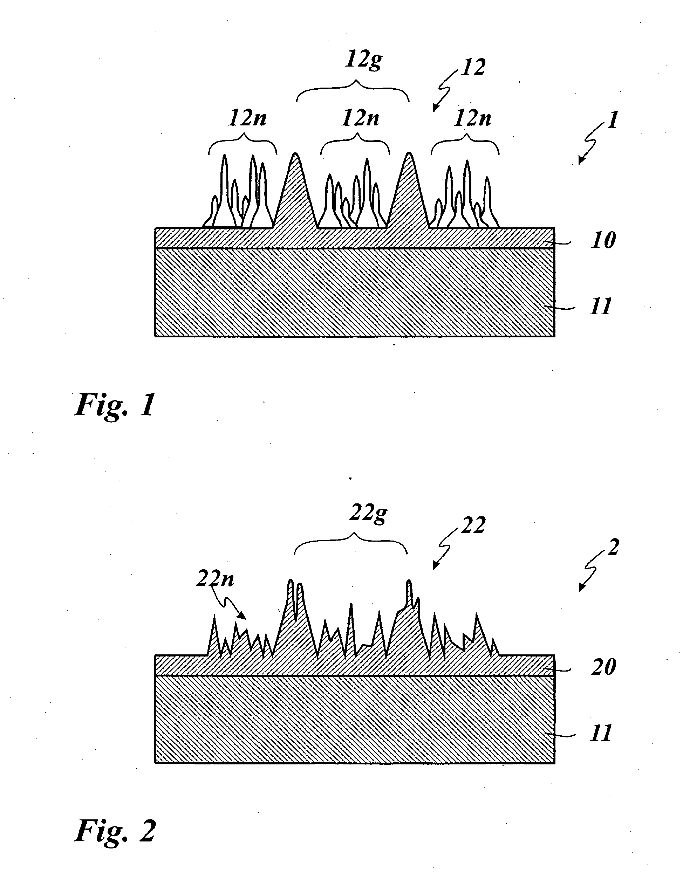

Fig. 1 zeigt eine Insektenschutzfolie 1, die eine insektenabweisende Schicht 10 mit einem Oberflächenprofil 12 und eine Trägerschicht 11 aufweist. Die Trägerschicht 11 ist aus einer PVC-Folie mit einer Dicke von 12 bis 35 µm gebildet. Die insektenabweisende Schicht 10 kann beispielsweise aus einem thermoplastischen Kunststoff oder aus einem UV-härtbaren Lack gebildet sein mit einer Dicke von 1 bis 30 µm. Weiter ist es auch möglich, dass zwischen der Trägerschicht 11 und der insektenabweisende Schicht 10 noch ein oder mehrere weitere Schichten, beispielsweise Haftvermittlungsschichten, Dekorschichten oder auch metallische Schichten vorgesehen sind.

Das Oberflächenprofil 12 der insektenabweisenden Schicht 10 ist aus einer regelmäßigen Gitterstruktur 12g und stochastischen Feinstrukturen 12n gebildet, die wegen ihrer im Nanometerbereich liegenden Strukturparameter im weiteren als Nanostrukturen bezeichnet werden. Die Nanostrukturen 12n sind in den "Tälern" der Gitterstruktur 12g angeordnet. Bei der Gitterstruktur 12g handelt es sich um eine zweidimensionale Gitterstruktur, die voneinander beabstandete kegelförmige Erhebungen aufweist, die in einem quadratischen Raster angeordnet sind.

Die Nanostrukturen 12n sind aus zufällig verteilten Erhebungen gebildet, die eine zufällige Höhe und eine zufällige Gestalt aufweisen, wobei die Grundflächen der Erhebungen in einer gemeinsamen Ebene angeordnet sind. Es kann aber auch vorgesehen sein, daß die Spitzen der Erhebungen in einer gemeinsamen Ebene liegen oder dass weder die Grundflächen noch die Spitzen der Erhebungen in einer gemeinsamen Ebene liegen.

Die funktionsbestimmenden Parameter, wie der mittlere Abstand zwischen zwei Erhebungen oder die Tiefe der "Täler", in denen die Nanostruktur 12n und die Gitterstruktur 12g ausgeführt sind, unterscheiden sich etwa um den Faktor 10. Die Nanostruktur 12n weist funktionsbestimmende Parameter im Nanometerbereich auf, die Gitterstruktur 12g weist funktionsbestimmende Parameter im Mikrometerbereich auf. Bei der Gitterstruktur 12g handelt es sich also im Vergleich zu der Nanostruktur 12n um eine Grobstruktur.

Die Schutzwirkung gegenüber Insekten begründet sich daraus, dass die Oberfläche der insektenabweisenden Schicht infolge der vorstehend beschriebenen Ausbildung die Haftung der Insekten verhindert, weil sie mit einem lokal wechselnden Oberflächenprofil ausgebildet ist, an das sich der Insekten- oder Insektenlarvenfuß nicht anzupassen vermag. Kriechende bzw. laufende Insekten oder andere kleine Lebewesen können deshalb den von der Insektenschutzfolie überdeckten Bereich nicht überwinden, insbesondere wenn dieser Bereich senkrecht angeordnet ist.

Fig. 2 zeigt nun eine Insektenschutzfolie 2, die sich von der in Fig. 1 beschriebenen Insektenschutzfolie 1 hinsichtlich der Ausbildung der Oberflächenstruktur der insektenabweisenden Schicht unterscheidet. Die Insektenschutzfolie 2 werst eine insektenabweisende Schicht 20 mit einem Oberflächenprofil 22 auf, bei dem stochastische Nanostrukturen 22n einer regelmäßigen Gitterstruktur 22g überlagert sind. Bei der Gitterstruktur 22g handelt es sich um eine eindimensionale Gitterstruktur, die voneinander beabstandete Rippen mit annähernd dreieckförmigem Querschnitt aufweist, die in einem linearen Raster angeordnet sind.

Die Nanostrukturen 22n sind aus zufällig verteilten Erhebungen bzw. Vertiefungen gebildet, die aus der Oberfläche der Gitterstruktur 22g hervorragen und/oder in die Oberfläche der Gitterstruktur 22g hineinragen. Die Erhebungen bzw. Vertiefungen weisen eine zufällige Höhe und eine zufällige Gestalt auf, wobei zur besseren Darstellung in Fig. 2 nur die Erhebungen bzw. Vertiefungen dargestellt sind, die in der Schnittebene liegen. Bei den Erhebungen bzw. Vertiefungen der Nanostrukturen 22n handelt es sich also nicht um rippenförmige Erhebungen oder rillenförmige Vertiefungen, sondern um über die gesamte Oberfläche der Gitterstruktur 22g zufällig verteilte und zufällig ausgebildete annähernd kegelförmige Erhebungen bzw. Vertiefungen.

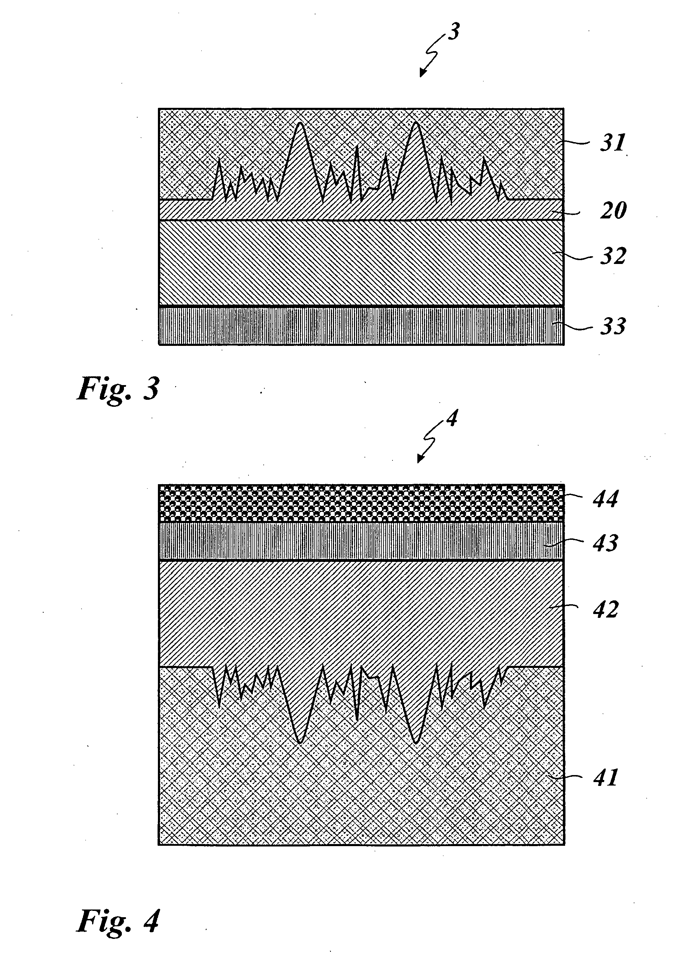

Fig. 3 zeigt nun ein Klebeband 3, das eine Kleberschicht 33, eine Trägerschicht 32, die vorstehend beschriebene insektenabweisende Schicht 20 (siehe Fig. 2) sowie eine Schutzschicht 31 umfaßt. Die Schutzschicht 31 bedeckt die funktionsbestimmende Oberflächenstruktur (siehe Fig. 2) der insektenabweisenden Schicht 20 und schützt sie bis zum Gebrauch vor Beschädigung und/oder Verschmutzung. Bei der Schutzschicht 31 handelt es sich vorzugsweise um eine wasserlösliche Schutzschicht, die beispielsweise durch Einwirkung von Regen abwaschbar ist.

Die Unterseite der insektenabweisenden Schicht 20 ist mit der Trägerschicht 32 verbunden, die in dem dargestellten Ausführungsbeispiel als PVC-Folie mit einer Dicke von 12 bis 35 µm ausgebildet ist. Die Trägerschicht 32 verleiht dem Klebeband 3 eine ausreichende Festigkeit, um es beispielsweise als Schutzring am Stamm eines Obstbaumes zu befestigen. Die Unterseite der Trägerschicht 32 ist mit der Kleberschicht 33 versehen. In dem dargestellten Ausführungsbeispiel ist die Kleberschicht 33 nicht von einer weiteren Schutzschicht bedeckt, weil vorgesehen ist, das Klebeband 3 zu einer Rolle aufgewickelt in Verkehr zu bringen, wobei die Oberseite der Schutzschicht 31 nach außen weist und deshalb im aufgerollten Zustand des Klebebandes 3 zugleich eine Schutzschicht für die Kleberschicht 33 bildet. Bei der Kleberschicht 33 kann es sich um einen Kaltkleber handeln, wie er üblicherweise für Klebebänder verwendet wird.

Fig. 4 zeigt eine Transferfolie 4 mit einer Trägerfolie 41, die zugleich als Replizierschicht ausgebildet ist. Die Trägerfolie 41 kann eine Dicke von 21 bis 35 µm aufweisen und aus einem thermoplastischen Kunststoff wie PE ausgebildet sein. In die Oberfläche der Trägerfolie 41 ist mittels Heißprägen ein Masterprofil abgeformt, welches die Oberflächenstruktur einer auf der Trägerfolie 41 aufgebrachten insektenabweisenden Schicht 42 bestimmt. Zwischen der Trägerfolie 41 und der insektenabweisenden Schicht 42 kann eine Trennschicht bzw. Ablöseschicht vorgesehen sein, die das spätere Ablösen der insektenabweisenden Schicht 42 von der Trägerfolie 41 erleichtert. Die insektenabweisende Schicht 42 weist eine Dicke von 12 bis 35 µm auf. Auf die der Trägerfolie 41 abgewandte Seite der insektenabweisenden Schicht 42 ist eine Kleberschicht 43 aufgebracht, die von einer Schutzschicht 44 bedeckt ist. Die Schutzschicht 44 kann vor dem Aufbringen der Transferfolie 4 von der Kleberschicht 43 abgezogen werden, sodann kann die Trägerfolie 41 von der insektenabweisenden Schicht 42 abgezogen werden.

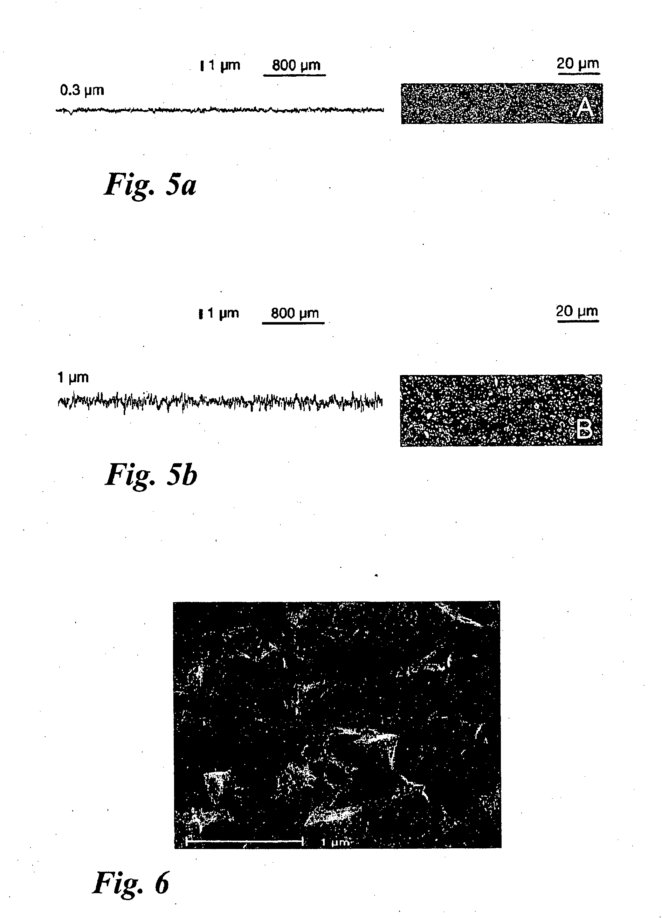

Die Fig. 5a, b und 6 zeigen nun typische Profilformen praktisch ausgeführter Insektenschutzfolien. In beiden Aussführungsbeispielen handelt es sich um stochastische Strukturen mit Verläufen auf verschiedenen Größenskalen mit typischen Strukturtiefen der Grobstruktur von einigen Mikrometern.

Die mit (A) und (B) bezeichneten Insektenschutzfolien in Fig. 5a und 5b wurden als UV-replizierte Folien hergestellt und haben in praktischen Insektentests sehr erfolgreich abgeschnitten. Bei den Tests wurden die Insektenschutzfolien senkrecht oder unter einem sehr steilen Winkel angebracht.

Die in Fig. 5a dargestellte Folie weist Strukturtiefen im Bereich von 3 bis 500 nm auf, die in Fig. 5b dargestellte Folie weist Strukturtiefen im Bereich von 1 bis 2 µm auf.

Fig. 6 zeigt beispielhaft in nochmals vergrößerter Darstellung die Draufsicht auf eine Insektenschutzfolie, deren Strukturelemente Breiten von 5 bis 500 nm aufweisen. Dabei ist besonders gut zu erkennen, dass die Strukturelemente sowohl hinsichtlich ihrer Größe als auch ihrer Form zufällig ausgebildet und zufällig verteilt sind. Auf einer solchen Oberfläche vermögen Insekten nicht zu haften, weil sie sich nicht an die ständig ändernden Oberflächenbedingungen anzupassen vermögen.

Die in den Fig. 5a bis 6 gezeigten Oberflächenstrukturen können beispielsweise durch Belichtung einer Photolackschicht durch ein Mattglas oder dergleichen und anschließendes Entfernen der nicht belichteten Bereiche und Aushärten der Photolackschicht erzeugt werden. Auf diese Weise kann auch das Master für eine Replizierwalze erzeugt werden, die in einem Rolle-zu-Rolle-Verfahren zur Herstellung der Insektenschutzfolie einsetzbar ist.

## Patentansprüche

1. Insektenschutzfolie mit einer insektenabweisenden Schicht, wobei
die insektenabweisende Schicht eine räumliche Oberflächenstruktur mit statistisch und/oder periodisch verteilten Grobstrukturelementen und/oder statistisch und/oder periodisch verteilten Feinstrukturelementen aufweist und die Oberflächenstruktur
a) durch Heißprägen in der insektenabweisenden Schicht ausgeformt ist oder
b) durch Kaltprägen eines UV-härtbaren Lacks und dessen Aushärtung zu der insektenabweisenden Schicht gebildet ist.

2. Insektenschutzfolie nach Anspruch 1,
**dadurch gekennzeichnet,**
**dass** die Abmessungen der Strukturelemente, wie Breite, Höhe und lateraler Abstand, ≤ 100 µm sind.

3. Insektenschutzfolie nach Anspruch 1 oder 2,
**dadurch gekennzeichnet,**
**dass** die Abmessungen der Feinstrukturelemente, wie Breite, Höhe und lateraler Abstand, im Bereich zwischen 5 nm und 1.000 nm, vorzugsweise zwischen 5 nm und 200 nm, liegen.

4. Insektenschutzfolie nach einem der vorhergehenden Ansprüche,
**dadurch gekennzeichnet,**
**dass** die Abmessungen der Grobstrukturelemente, wie Breite, Höhe und lateraler Abstand, im Bereich zwischen 2 µm und 100 µm liegen.

5. Insektenschutzfolie nach einem der vorhergehenden Ansprüche,
**dadurch gekennzeichnet,**
**dass** die Grobstruktur 5 bis 1.000 mal größere typische Strukturparameter, wie Breite, Tiefe und lateraler Abstand der Strukturelemente, als die Feinstruktur aufweist.

6. Insektenschutzfolie nach einem der vorhergehenden Ansprüche,
**dadurch gekennzeichnet,**
**dass** die mittlere Anzahl der Strukturelemente pro Millimeter zwischen 10 und 5•10⁵ liegt.

7. Insektenschutzfolie nach einem der vorhergehenden Ansprüche,
**dadurch gekennzeichnet,**
**dass** die Feinstruktur (12n, 22n) eine mittlere Tiefe von 5 nm bis 1.000 nm, vorzugsweise von 5 nm bis 200 nm, bei einer maximalen Tiefe von 1.000 nm, vorzugsweise 10 nm bis 300 nm, aufweist.

8. Insektenschutzfolie nach einem der vorhergehenden Ansprüche,
**dadurch gekennzeichnet,**
**dass** die Feinstruktur (12n, 22n) ein mittleres Tiefen-zu-Breiten-Verhältnis von 0,3 bis 5 aufweist.

9. Insektenschutzfolie nach einem der vorhergehenden Ansprüche,
**dadurch gekennzeichnet,**
**dass** die Grobstruktur (12g, 22g) eine regelmäßige Gitterstruktur ist, wobei der Abstand zwischen zwei benachbarten Erhebungen der Gitterstruktur 0,3 µm bis 10 µm beträgt.

10. Insektenschutzfolie nach Anspruch 9,
**dadurch gekennzeichnet,**
**dass** die Gitterstruktur ein Tiefen-zu-Breiten-Verhältnis > 1 aufweist.

11. Insektenschutzfolie nach einem der vorhergehenden Ansprüche,
**dadurch gekennzeichnet,**
**dass** die räumliche Oberflächenstruktur erste Bereiche mit einer als periodische Struktur ausgebildeten Grobstruktur und zweite Bereiche mit einer als periodische Struktur ausgebildeten Feinstruktur aufweist, wobei vorgesehen ist, dass die ersten und die zweiten Bereiche miteinander vermischt sind.

12. Insektenschutzfolie nach einem der vorhergehenden Ansprüche,
**dadurch gekennzeichnet,**
**dass** die insektenabweisende Schicht (10, 20, 42) mit mindestens einer wasserlöslichen und/oder biologisch abbaubaren Schutzschicht (31) bedeckt ist.

13. Insektenschutzfolie nach einem der vorhergehenden Ansprüche,
**dadurch gekennzeichnet,**
**dass** die Insektenschutzfolie als Transferfolie mit einer Trägerfolie und einer von der Trägerfolie ablösbaren Übertragungslage ausgestaltet ist und dass die insektenabweisende Schicht in der Übertragungslage als Schicht der Übertragungslage angeordnet ist.

14. Insektenschutzfolie nach einem der vorhergehenden Ansprüche,
**dadurch gekennzeichnet,**
**dass** die Insektenschutzfolie als ein zu einer Rolle gewickeltes Klebeband ausgestaltet ist, welches die insektenabweisende Schicht und eine an der Unterseite des Klebebandes angeordnete Kleberschicht umfasst, und dass auf der Oberseite der insektenabweisenden Schicht eine Ablöseschicht angeordnet ist oder die insektenabweisende Schicht als Ablöseschicht ausgestaltet ist, die das Aufrollen des Klebebands ermöglicht.

15. Insektenabweisende Suspension, enthaltend flockenförmige Partikel der Insektenschutzfolie nach einem der Ansprüche 1 bis 14.

## Claims

1. Insect protective film having an insect-repellent layer, wherein the insect-repellent layer has a three-dimensional surface structure havingstatistically and/or periodically distributed rough structural elements and/or statistically and/or periodically distributed fine structural elements and the surface structure
a) is mouldedin the insect-repellent layerbyhot embossing or
b)isformed into the insect-repellent layerbycold embossing a UV-curablecoating and its curing.

2. Insect protective film according toclaim 1,
**characterised in that**
the measurements of the structural elements, such as width, height and lateral distance are ≤ 100µm.

3. Insect protective film according to claim 1 or 2,
**characterised in that**
the measurements of the fine structural elements, such as width, height and lateral distance,range between 5nm and 1000nm, preferably between 5nm and 200nm.

4. Insect protective film according to one of the preceding claims,
**characterised in that**
the measurements of the rough structural elements, such as width, height and lateral distance, range between 2µm and 100µm.

5. Insect protective film according to one of the preceding claims,
**characterised in that**
the rough structure has5 to 1000-times largertypical structural parameters such as width, depth and lateral distance of the structural elements, than the fine structure.

6. Insect protective film according to one of the preceding claims,
**characterised in that**
the mean quantity of structural elements per millimetre ranges between 10 and 5·10⁵.

7. Insect protective film according to one of the preceding claims,
**characterised in that**
the fine structure (12n, 22n) hasa mean depth of 5nm to 1000nm, preferably 5nm to 200nm, ata maximum depth of 1000nm, preferably 10nm to 300nm.

8. Insect protective film according to one of the preceding claims,
**characterised in that**
the fine structure (12n, 22n) hasa mean depth-to-widthratio of 0.3 to 5.

9. Insect protective film according to one of the preceding claims,
**characterised in that**
the rough structure (12g, 22g) is a regular lattice structure, whereinthe distance between two neighbouring peaks of the lattice structure is 0.3µm to 10µm.

10. Insect protective film according to claim 9,
**characterised in that**
the lattice structure hasa depth-to-width ratio of >1.

11. Insect protective film according to one of the preceding claims,
**characterised in that**
the three-dimensional surface structure has first regionshavinga rough structure designed as a periodic structure and secondregionshavingafine structure designed as a periodic structure, wherein provision is made for that the first and second regionsto bemixed together.

12. Insect protective film according to one of the preceding claims,
**characterised in that**
the insect-repellent layer (10, 20, 42) is covered with at least one water-solubleand/or biodegradable protective layer (31).

13. Insect protective film according to one of the preceding claims,
**characterised in that**
the insect protective film is configured as a transfer film having a carrierfilm and a transfer layer that can be released from the carrier film, and the insect-repellent layer is arranged in the transfer layer as a layer of the transfer layer.

14. Insect protective film according to one of the preceding claims,
**characterised in that**
the insect protection film is designed as an adhesive tape that is wound into a roll, which comprises the insect-repellent layer and an adhesive layer arranged on the underside of the adhesive tape and **in that** there is a releaselayer arranged on the upper sideof the insect-repellent layer, or the insect-repellent layer is designed as a release layer that allows the adhesive tape to be rolled up.

15. Insect-repellent suspension, containing particles of the insect protective film in flake form according to one ofclaims 1 to 14.

## Revendications

1. Film protecteur anti-insectes avec une couche répulsive,
la couche répulsive présentant une structure de surface spatiale avec des éléments de structure grossière répartis de manière aléatoire et/ou périodique et/ou des éléments de structure fine répartis de manière aléatoire et/ou périodique, et la structure de surface étant formée :
a) par estampage à chaud dans la couche répulsive ou
b) par estampage à froid d'une laque durcissable aux ultraviolets et durcissement de celle-ci pour constituer la couche répulsive.

2. Film protecteur anti-insectes selon la revendication 1, **caractérisé en ce que** les dimensions des éléments de structure telles que la largeur, la hauteur et l'écartement latéral sont ≤ 100 µm.

3. Film protecteur anti-insectes selon la revendication 1 ou 2, **caractérisé en ce que** les dimensions des éléments de structure fine telles que la largeur, la hauteur et l'écartement latéral sont comprises dans la plage entre 5 et 1 000 nm, de préférence entre 5 et 200 nm.

4. Film protecteur anti-insectes selon l'une quelconque des revendications précédentes, **caractérisé en ce que** les dimensions des éléments de structure grossière telles que la largeur, la hauteur et l'écartement latéral sont comprises dans la plage entre 2 et 100 µm.

5. Film protecteur anti-insectes selon l'une quelconque des revendications précédentes, **caractérisé en ce que** la structure grossière présente des paramètres de structure typiques 5 à 1 000 fois plus grands, tels que la largeur, la profondeur et l'écartement latéral des éléments de structure, que la structure fine.

6. Film protecteur anti-insectes selon l'une quelconque des revendications précédentes, **caractérisé en ce que** le nombre moyen des éléments de structure par millimètre est compris entre 10 et 5x10⁵.

7. Film protecteur anti-insectes selon l'une quelconque des revendications précédentes, **caractérisé en ce que** la structure fine (12n, 22n) présente une profondeur moyenne de 5 à 1 000 nm, de préférence de 5 à 200 nm pour une profondeur maximale de 1 000 nm, de préférence de 10 à 300 nm.

8. Film protecteur anti-insectes selon l'une quelconque des revendications précédentes, **caractérisé en ce que** la structure fine (12n, 22n) présente un rapport profondeur-largeur moyen de 0,3 à 5.

9. Film protecteur anti-insectes selon l'une quelconque des revendications précédentes, **caractérisé en ce que** la structure grossière (12g, 22g) est une structure quadrillée régulière, la distance entre deux élévations contigües de la structure quadrillée étant comprise entre 0,3 et 10 µm.

10. Film protecteur anti-insectes selon la revendication 9, **caractérisé en ce que** la structure quadrillée présente un rapport profondeur-largeur > 1.

11. Film protecteur anti-insectes selon l'une quelconque des revendications précédentes, **caractérisé en ce que** la structure de surface spatiale présente des premières zones avec une structure grossière réalisée comme une structure périodique et des secondes zones avec une structure fine réalisée comme une structure périodique, étant prévu que les premières et les secondes zones soient mélangées entre elles.

12. Film protecteur anti-insectes selon l'une quelconque des revendications précédentes, **caractérisé en ce que** la couche répulsive (10, 20, 42) est recouverte d'au moins une couche de protection (31) soluble dans l'eau et/ou biodégradable.

13. Film protecteur anti-insectes selon l'une quelconque des revendications précédentes, **caractérisé en ce que** le film protecteur anti-insectes est configuré comme un film de transfert avec un film porteur et une couche de transmission détachable du film porteur et **en ce que** la couche répulsive est disposée dans la couche de transmission comme couche de la couche de transmission.

14. Film protecteur anti-insectes selon l'une quelconque des revendications précédentes, **caractérisé en ce que** le film protecteur anti-insectes est configuré comme une bande adhésive enroulée en un rouleau qui comporte la couche répulsive et une couche de colle disposée sur le côté inférieur de la bande adhésive, et **en ce qu'**une couche de détachement est disposée sur le côté supérieur de la couche répulsive ou la couche répulsive est configurée comme une couche de détachement qui permet l'enroulement de la bande adhésive.

15. Suspension répulsive contenant des particules floconneuses de film protecteur anti-insectes selon l'une quelconque des revendications 1 à 14.
